# EUROPEAN PATENT APPLICATION

(11) **EP 2 549 582 A1**
(43) Date of publication of application: **23.01.2013**
(21) Application number: 11756166.2
(22) Date of filing: 10.03.2011
(51) Int. Cl.: H01M 10/50, H01M 10/48

(54) **BATTERY ASSEMBLY**

(30) Priority: 15.03.2010 JP 2010057921
(71) Applicant: Mitsubishi Heavy Industries, Ltd., Tokyo 108-8215 (JP)
(72) Inventor: NISHIDA, Takehiko, Tokyo 108-8215 (JP)
(74) Representative: Bongiovanni, Simone
(86) International application number: PCT/JP2011/055612
(87) International publication number: WO 2011/114980

(57) **Abstract**

According to the invention, an battery system with an arm formed by electrically connected a plurality of battery cells to each other is provided. The battery system includes: a temperature detection unit that is provided to each of battery cells; a cooling unit that cools the arm; and a control unit that identifies a maximum value from the temperatures of the battery cells measured by the temperature detection unit and controls the cooling unit so that the maximum value falls within a predetermined allowable temperature range.

## Description

### TECHNICAL FIELD

The present invention relates to an battery system which includes a cooling system. In the battery system, multiple arms are electrically connected each other. In the arm, multiple battery cells are connected in series to each other.
Priority is claimed on Japanese Patent Application No. 2010-057921, filed March 15, 2010, the content of which is incorporated herein by reference.

### BACKGROUND ART

Conventionally, as a method of cooling an battery system which consists of electrically connected (hereinafter, referred to as "electrical connection") a plurality of blocks (arms), having a plurality of battery cells connected in series to each other, in series or in parallel to each other in combination, a method, in which cooling of each arm is controlled so that a difference in the temperature between the arms does not exceed a threshold value, has been adopted (for example, PTL 1). Accordingly, the lifetime of the entire battery system can be improved by reducing the variation of the temperatures of each arm and averaging the degradation rate of the arms.

### [Related Art Literature]

### Patent Literature

PTL 1: Japanese Unexamined Patent Application, First Publication No. 2003-142167

### DISCLOSURE OF INVENTION

### [Problems to be Solved]

However, in the method disclosed in PTL 1, a temperature management is performed regarding the arm as one unit. Thus, the temperature of each arm is measured, and is controlled so that a difference in the temperature becomes a threshold value or less. In other words, there is no consideration on whether a variation in the temperature of the individual battery cells constituting the arm exists or not.
Consequently, even when the temperature of a part of the battery cells constituting a certain arm is higher than the temperature of the other battery cell, there is a possibility that the temperature of the battery cell with a high temperature can not be sufficiently reflected as the temperature of the arm when the transfer of heat to a temperature measurement point installed inside a battery case is slow or the ratio of the normal battery cells is sufficiently large.
For this reason, even when a variation in the temperature occurs between the battery cells constituting the arm, it can be evaluated that the battery is normal when the temperature detected in the entire arm becomes a predetermined threshold value or less, so that a variation in the temperature is not reflected in the cooling control of the arm. Then, when degradation in the battery cell with a high temperature continues, the load on the other battery cell increases as much as the degradation, so that the lifetime of the arm having the battery cell with a high temperature is degraded.
Furthermore, when the battery system having the plurality of arms is supposed as in PTL 1, it can be evaluated that the battery is normal when a difference in the temperature detected for each arm becomes a predetermined threshold value or less, so that a variation in the temperature is not reflected in the cooling control of the arm. In this case, a variation in the lifetime occurs between the respective arms constituting the battery system in addition to the degradation in the lifetime of each arm. That is, a variation in the degradation speed for each arm occurs, so that the lifetime of the battery system including the respective arms can be shortened.
On the other hand, a method can be supposed in which the degradation in the lifetime of the arm having the battery cell can be prevented by individually cooling the battery cell with a high temperature, but there is a problem in that the battery system increases in size when a cooling fan is simply provided for each of the battery cells constituting the arm.

The present invention is made to solve the above-described problems, and it is an object of the present invention to provide an battery system with a cooling system capable of suppressing degradation in the lifetime of each arm by performing an accurate temperature management for each battery cell with a simple cooling structure.
Furthermore, it is an object of the present invention to provide an battery system including a plurality of arms, capable of cooling arms so that the degradation speed between the arms becomes more uniform, and capable of cooling arms so that not only the degradation speed between respective battery cells included in one arm but also the degradation speed between the arms become more uniform.

### [Means to Solve Problems]

In order to solve the above-described problem, the invention provides the following means.
An aspect of the present invention is an battery system with a plurality of arms, each of which consists of electrically connected battery cells to each other, the battery system including: temperature detection units that are provided to each of the battery cells; a cooling unit that cools the arm; and a control unit that identifies a maximum value from temperatures of the battery cells measured by the temperature detection units and controls the cooling unit so that the maximum value of the battery cells falls within a predetermined allowable temperature range.

According to this configuration, the temperature of each battery cell is directly measured by the temperature detection unit, and the arm is cooled in a manner such that the control unit controls the cooling unit so that the maximum value of the measured temperatures falls within a predetermined allowable temperature range (to be described later). Accordingly, the upper limit value of the temperature of the battery cell constituting the arm falls into the allowable temperature range with a simple cooling structure without individually providing a fan as a cooling unit for each battery cell. As a result, the degradation speed of the battery cell constituting the arm is reduced, so that the degradation in the lifetime of each arm can be suppressed.

### [Advantageous Effects of Invention]

According to the battery system of the present invention, the lifetime of the battery system can be extended, since the variation of the degradation speed of the battery cells in the arm can be reduced and the degradation speed of the battery cells can be averaged with a simple cooling structure.

### BRIEF DESCRIPTION OF DRAWINGS

FIG. 1 is a connection example of an battery system according to a first embodiment of the present invention.
FIG. 2 is a configuration diagram of the battery system according to the first embodiment of the present invention.
FIG. 3 is a diagram illustrating a correlation between a degradation rate and a temperature of a common battery.
FIG. 4 is a connection example of an battery system according to a second embodiment of the present invention.
FIG. 5 is a configuration diagram of the battery system according to the second embodiment of the present invention.
FIG. 6 is a modified example of the battery system according to the first embodiment of the present invention.

### BEST MODE FOR CARRY OUT THE INVENTION

Hereinafter, an embodiment according to the present invention will be described by referring to the drawings.

### [First Embodiment]

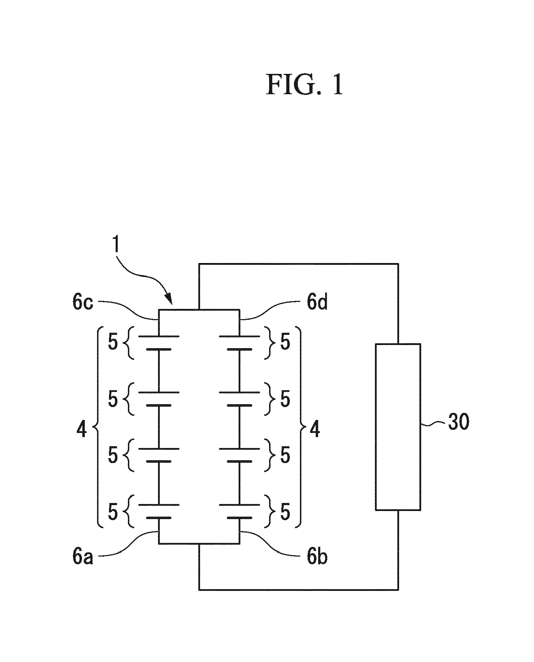

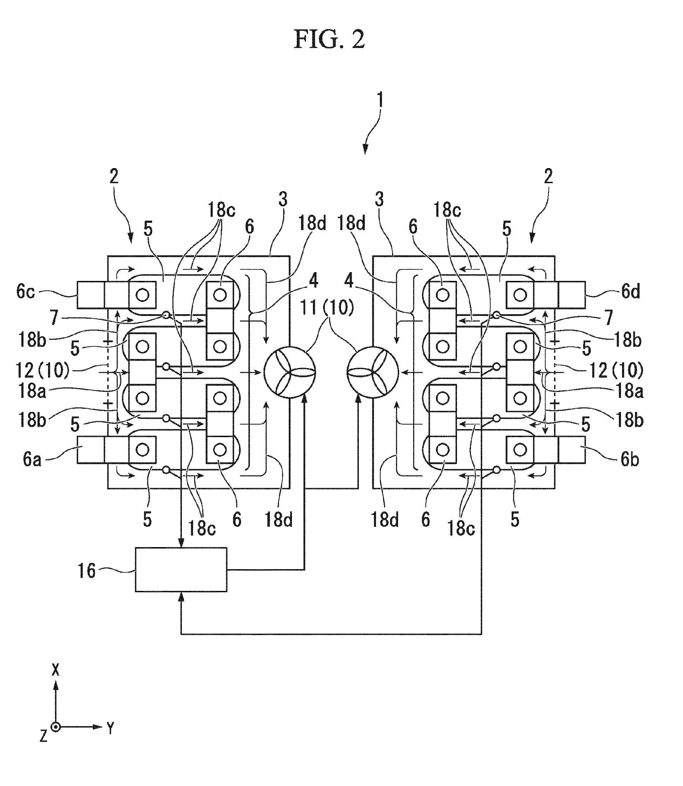

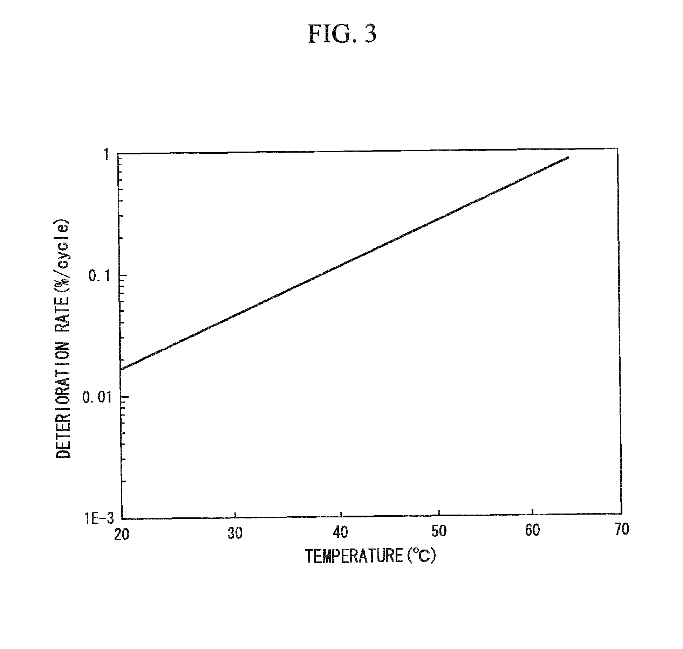

FIG. 1 is a connection example of an battery system according to a first embodiment of the present invention. FIG. 2 is a configuration diagram of the battery system 1 shown in FIG. 1. FIG. 3 is a diagram illustrating a correlation between a degradation rate and a temperature of a common battery. In the embodiment, an example of the battery system with a plurality of battery units 2 will be described. However, the battery system described in the present invention may include one or more battery units 2.

As shown in FIGS. 1 and 2, the battery system 1 of the embodiment includes two battery units 2. Each battery unit 2 includes: a plurality of arms 4 which are formed by electrically connected respective battery cells 5 in series to each other through a busbar 6; a plurality of battery cases 3 which are provided so as to accommodate each of corresponding arm 4; and a plurality of cooling units 10 which are provided to each of battery cases 3. Further, the battery system 1 is electrically connected to a load 30 such as an electric motor which is mounted on, for example, an electric vehicle.
In the embodiment, the cooling unit 10 includes a fan 11 which exhausts the air inside the battery case 3 to the outside and intake exhaust ports 12 which feed and exhausts the air between the inside and the outside of the battery case 3, and among these components, the fan 11 is electrically connected to a control unit 16. Further, the arms 4 of each of the battery units 2 are connected in parallel to each other as shown in FIG. 1 so that busbars 6a and 6b having the same polarity and busbars 6c and 6d having the same polarity are respectively connected to each other.

As shown in FIG. 2, each battery cell 5 which constitutes the arm 4 is provided with a temperature sensor 7 which serves as a temperature detection unit measuring each temperature thereof. Each temperature sensor is electrically connected to the control unit 16, and the control unit 16 receives the temperature information of the battery cell 5 from each temperature sensor 7.

Here, one kind of method of cooling the inside of the battery unit 2 will be described. For example, when the arm 4 inside the left battery unit 2 of FIG. 2 is cooled, the control unit 16 receives the temperature information of each battery cell 5 from the temperature sensor 7 inside the battery unit 2, and identifies the maximum value from the measurement temperatures of all battery cells 5 constituting the arm 4 stored inside the battery unit 2. Then, the control unit 16 transmits a control signal to the fan 11 installed in the battery case 3 so that the temperature of the battery cell 5 representing the maximum value among the identified maximum values of the arm 4 falls within a predetermined allowable temperature range (to be described later). The fan 11 which receives the control signal rotates at the number of rotations according to the information on the number of rotations included in the control signal so as to cool the arm 4 inside the battery case 3.
Accordingly, since the temperature of the battery cell 5 with the highest temperature inside the arm 4 is accurately detected and is cooled by the fan 11, it is possible to reduce the degradation speed of the battery cell 5 and suppress the degradation of each battery unit 2 accommodating the arm 4.
Furthermore, in the embodiment, an example has been described in which one intake exhaust port 12 is provided, but the plurality of intake exhaust ports may be provided, and an opening and closing mechanism 15 and a driving mechanism 14 to be described later may be connected to the intake exhaust port so as to adjust the volume of cooling air.

Next, referring to FIGS. 1 and 2, the cooling of the battery system with a plurality of battery units 2 will be described. As shown in FIG. 2, in each battery unit 2, the fan 11 is provided at the center of the side surface of the battery case 3, and the battery units 2 are provided so that the shape of the battery case 3, the arrangement of the arm 4 and the battery cell 5 inside the battery case 3, and the arrangement of the intake exhaust port 12 are planarly symmetrical to each other with respect to the arm 4. Furthermore, when the reducing the variation in the degradation speed between the battery units 2 is not much considered, the arrangement of the battery units 2 is not limited to the planarly symmetrical arrangement. Further, each number of the fans 11 and the intake exhaust ports 12 is not limited to one, but may be plural.

Here, when the battery unit 2 is seen from the Y direction in FIG. 2, the fan 11 and the intake exhaust port 12 are arranged at the center of the side surface of the battery case 3 in the height direction (Z direction). However, the invention is not limited thereto, and the installation positions of the fan 11 and the intake exhaust port 12 may be appropriately changed in the height direction in accordance with the heat generating portion of the arm 4. For example, the installation positions of the fan 11 and the intake exhaust port 12 are set so that the height thereof is equal to the height of the electrode terminal of the battery cell 5 in the height direction. Accordingly, cooling air may be efficiently sent to the vicinity of the electrode terminal with the largest amount of heat generation in the battery cell 5, and the cooling effect with respect to the arm 4 may be further improved.

The "planar symmetry" indicates a case where the respective members of the battery units 2 are symmetrically arranged with respect to the arm 4 described in the embodiment. The battery units 2 which have typically the same structure are used. Then, one battery unit 2 is rotated by a predetermined angle (an arbitrary angle from 0° to 359°) with respect to the arm 4, and the other battery unit 2 is disposed at a position where the battery unit is moved in the X, Y, or Z direction.

Furthermore, in the embodiment, two battery units 2 are arranged so that the fans 11 face each other, and the battery units 2 are symmetrical to each other even when the installation positions of the fans 11 are used as a reference. Accordingly, it is possible to suppress the cooling air discharged from one battery unit 2 from flowing into the other battery unit 2 and prevent the cooling effect of each battery unit 2 from being hindered by the other battery unit 2.

Further, the battery cells 5 which constitute the arm 4 are arranged in parallel each other with a constant interval, are arranged inside the battery case 3, and have a gap with respect to the inner wall of the battery case 3. Because of these, the gap becomes a passageway 18 which evenly cools each battery cell 5.

Specifically, a passageway 18a is formed in the vicinity of the intake exhaust port 12 in the air feeding direction, and a passageway 18b is formed along the inner wall near the intake exhaust port 12 of the battery case 3. Then, the passageway 18a directly becomes a passageway 18c which is formed in the gap between the battery cells 5, and the passageway 18b is also branched into respective passageways 18c which are formed between the respective battery cells 5. Subsequently, each passageway 18c merges with a passageway 18d which is formed along the inner wall near the fan 11 of the battery case 3, and the passageway 18d is connected to the fan 11 used for exhausting. As a result, the passageway 18 of cooling air which nearly evenly cools the respective battery cells 5 is formed in the periphery of each battery cell 5. Furthermore, in the embodiment, the fan 11 exhausts the air inside the battery case 3, but may feed air into the battery case 3, so that a passageway is formed in a direction opposite to that of the passageway 18 directed to the intake exhaust port 12 and air is exhausted from the intake exhaust port 12.

As described above, each battery cell 5 is provided with the temperature sensor 7 which serves as the temperature detection unit measuring each temperature, and the control unit 16 identifies the maximum value of each arm 4 from the measurement temperatures of all battery cells 5, and transmits a control signal to the fan 11 of each battery unit so that the identified maximum values of the arms 4 become substantially equal to each other. Then, the fan 11 which receives the control signal rotates at the number of rotations according to the information on the number of rotations included in the control signal.

Specifically, when the respective maximum values identified from the respective arms 4 are compared with each other and the maximum value of one arm 4 is higher than that of the other, the control unit 16 performs control so that the fan 11 corresponding to one arm 4 is rotated at the number of rotations larger than that of the fan 11 corresponding to the other arm 4. Accordingly, when the cooling is performed so that the volume of cooling air flowing to the passageway 18 corresponding to one arm 4 is relatively larger than that of the other, one arm can be cooled so that the maximum value thereof becomes substantially equal to the maximum value of the other arm 4. Here, the substantially equal temperature is not limited to one specific temperature such as the equal temperature, and is a concept in which the maximum values of the respective arms 4 fall within the predetermined allowable temperature range (for example, the range from 40°C to 45°C, of which the definition will be described later). Furthermore, the predetermined allowable temperature range is appropriately changeable depending on the design environment of the battery system 1, and is changed according to how the upper limit of the degradation rate is estimated.

FIG. 3 illustrates a relation between the battery temperature and the degradation rate. Here, the vertical axis which indicates the degradation rate is a logarithmic scale. From FIG. 3, it is understood that the degradation rate of the battery abruptly increases at an exponential rate as the temperature increases. Thus, when the arms 4 are cooled so that the maximum values become substantially equal to each other, a variation in the temperature between the respective arms can be reduced.

Furthermore, in the description above, two arms 4 are exemplified, but three or more arms may be used. In this case, the control unit 16 may control the cooling of the cooling unit 10 so that the maximum value of the arm 4 with the lowest temperature of the plurality of arms 4 is equal to the maximum value of the other arm 4. Further, the cooling control is not limited to the control in which the temperature is adjusted to the lowest maximum value among the temperatures of the arms 4 as in the case of the above-described control, and the number of rotations of the fan 11 of each battery unit 2 may be controlled so that the temperature becomes a predetermined temperature. For example, when a predetermined temperature range equal to or lower than a temperature corresponding to an allowable degradation rate (for example, in FIG. 3, on the assumption that the allowable degradation rate is set to 0.1, a "predetermined allowable temperature range" is defined as a temperature equal to or lower than a predetermined temperature, that is, approximately 40°C) is set, it is possible to reliably perform control so that the maximum values of the respective arms are equal to each other within the allowable degradation rate. Further, for example, when the battery is used in a cold area or the like, the lowest temperature of the identified maximum values of the respective arms may be lower than the recommended usage temperature of the battery system 1. Thus, for example, the predetermined temperature may be determined in consideration of the ambient temperature of the usage area and the recommended usage temperature of the battery system 1.

Further, as described above, the shape of the battery case 3, the arrangement of the arm 4 and the battery cell 5 inside the battery case 3, and the arrangement of the intake exhaust port 11 are all symmetrical to each other with respect to the arm 4. For example, when a plurality of battery units 2 with the same configuration are prepared and the respective members (the battery cells, the busbars, and the like) constituting the battery unit 2 are planarly symmetrically disposed with respect to the arm 4, the flow or the volume of the cooling air flowing into the respective battery units 2 can be adjusted to be equal to each other between the respective battery units 2. As a result, it is possible to adjust the cooling environments of the arms 4 between the battery units 2 to be equal to each other, reliably reduce a variation in the degradation speed between the arms 4 in the entire battery system 1, and make the degradation speed uniform.

In the embodiment, an example of the battery system 1 is shown in which the arms 4 formed by electrically connected the plurality of battery cells 5 in series to each other are respectively connected in parallel to each other. However, the number of the battery cells and the arms is not limited to that of FIG. 1. Further, the method of connected the arms may be a serial connection or a combination of a parallel connection and a serial connection.

Further, in the above-described example, an example has been described in which the number of battery cells constituting the arm 4 is the same. However, the invention is not limited thereto. The number of battery cells for each arm 4 may be different. For example, when the number of the battery cells 5 constituting the left battery unit 2 in FIG. 2 is set to four, the number of the battery cells 5 constituting the right battery unit 2 may be three or five. In this case, although the arrangement between the battery units 2 is not planarly symmetrical, at least an effect is obtained in which a variation in the degradation speed between the arms 4 disposed in each battery unit is reduced.

### [Second embodiment]

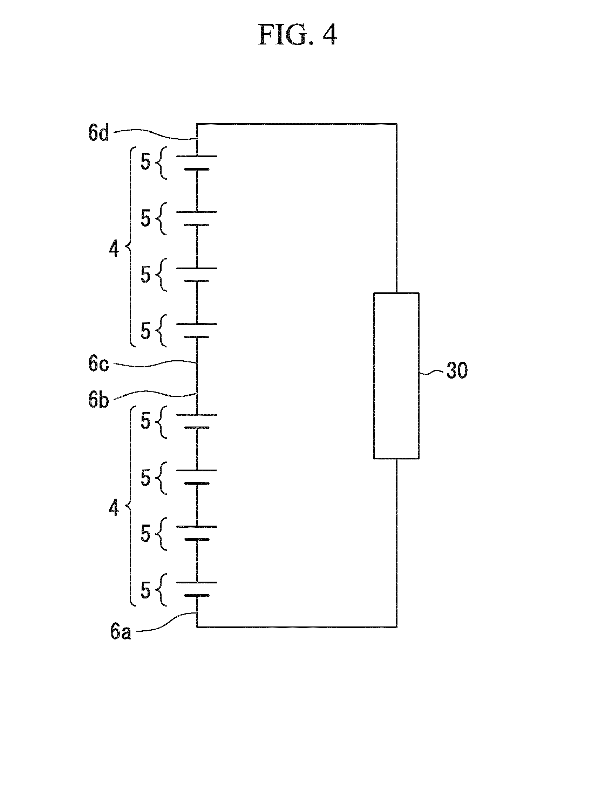

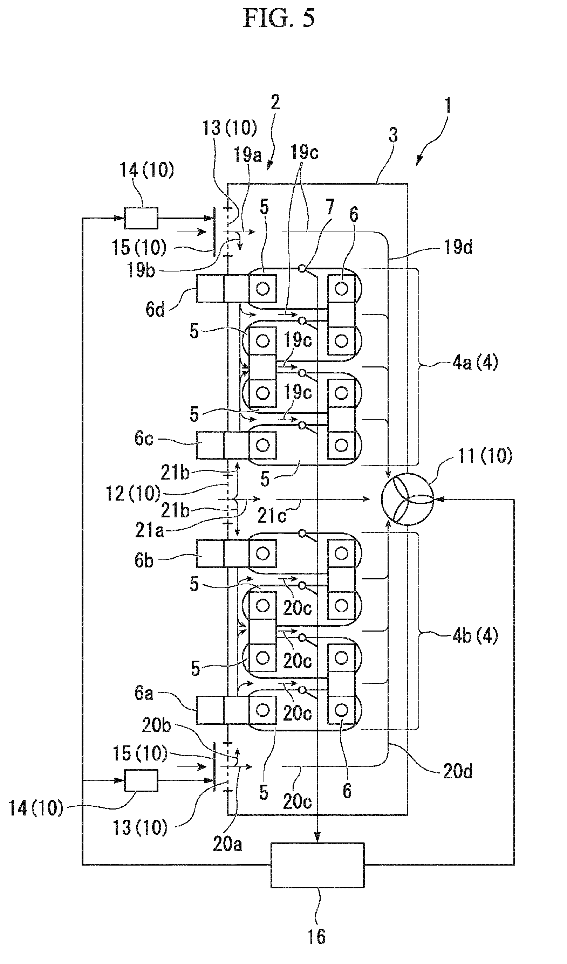

FIG. 4 is a connection example of an battery system according to a second embodiment of the present invention. Further, FIG. 5 is a configuration diagram of the battery system 1 shown in FIG. 4. As shown in FIGS. 4 and 5, the battery system 1 of the embodiment includes one or more battery units 2. The battery unit 2 includes: two arms 4 which are formed by electrically connected the plurality of battery cells 5 in series to each other through the busbar 6; the battery case 3 which accommodates the arm 4; and the cooling unit 10 which is provided to the battery case 3.

In the embodiment, the arms 4 are electrically connected in series to each other so that the busbars 6b and 6c with different polarities are connected to each other. Further, in the embodiment, the cooling unit 10 includes the fan 11 which exhausts the air inside the battery case 3 to the outside; the intake exhaust port 12 which feeds and exhausts the air between the inside and the outside of the battery case 3; and an auxiliary intake exhaust port 13 which is provided at a position near each arm 4. In this way, in the embodiment, two types of intake exhaust ports are present as the intake exhaust port 12 and the auxiliary intake exhaust port 13. Further, in two types of intake exhaust ports, the auxiliary intake exhaust port 13 includes the opening and closing mechanism 15, so that the air feeding and exhausting amount (the flow rate of the cooling air) can be adjusted. Then, the adjustment of the opening degree of the opening and closing mechanism 15 is performed by the control unit 16 and a driving unit 14.

As shown in FIG. 5, only one fan 11 is provided at the center of the side surface of the battery case 3, and only one intake exhaust port 12 is provided at the side surface opposite to the side surface of the battery case 3 provided with the fan 11. The shape of the battery case 3, the arrangement of two arms 4 and the battery cell 5 inside the battery case 3, and the arrangement of two auxiliary intake exhaust ports 13 are all planarly symmetrical about the line which connects the fan 11 and the intake exhaust port 12 (hereinafter, referred to as a first reference axis). Typically, two arms 4 and two auxiliary intake exhaust ports 13 respectively corresponding to the respective arms 4 are arranged at a position which is folded back about the first reference axis.
In the embodiment, the number of each of the fans 11 and the intake exhaust ports 12 is only one. However, only one fan 11 is provided at the above-described position, and one intake exhaust port 12 may be provided on the side surface opposite to the side surface of the battery case 3 provided with the fan 11 so as to correspond to each arm 4 (two intake exhaust ports in total). In this case, the shape of the battery case 3, the arrangement of two arms 4 and the battery cell 5 inside the battery case 3, and the arrangement of two auxiliary intake exhaust ports 13 and two intake exhaust ports 12 are planarly symmetrical about the line (hereinafter, referred to as a second reference axis) which connects the middle point of two intake exhaust ports 12 to the fan 11. That is, two arms 4 and two auxiliary intake exhaust ports 13 and two intake exhaust ports 12 respectively corresponding to the respective arms 4 are arranged at a position which is folded back about the second reference axis.

In this way, the "planar symmetry" mentioned in the present invention is a concept which includes the arrangement example inside the battery unit 2 in addition to the arrangement example between the battery units 2 described in the first embodiment.
Then, the battery cells 5 constituting the respective arms 4 are arranged inside the battery case 3 in a straight line shape at the same interval, and each of them has a gap with respect to the inner wall of the battery case 3. Accordingly, these gaps become passageways 19, 20, and 21 for the cooling air which evenly cools the respective battery cells 5.

Specifically, a passageway 21a is formed in the vicinity of the intake exhaust port 12 in the air feeding direction, a passageway 21b is formed along the inner wall near the intake exhaust port 12 of the battery case 3, passageways 19a and 20a are formed in the vicinity of two auxiliary intake exhaust ports 13 in the air feeding direction, and passageways 19b and 20b are formed along the inner wall near the auxiliary intake exhaust port 13 of the battery case 3. Then, the passageways 19a, 20a, and 21a directly become passageways 19c, 20c, and 21c respectively formed between the battery cells 5, and the passageways 19b, 20b, and 21b are also branched into the passageways 19c, 20c, and 21c which are respectively formed between the respective battery cells 5. Subsequently, the respective passageways 19c, 20c, and 21c merge with the passageways 19d, 20d, and 21d formed along the inner wall near the fan 11 of the battery case 3, and the passageways 19d, 20d, and 21d are connected to the fan 11 which exhausts air. As a result, the passageways 19, 20, and 21 for cooling air which evenly cools the respective battery cell 5 are formed around the respective battery cells 5. Furthermore, in the embodiment, the fan 11 exhausts the air inside the battery case 3, but may feed air into the battery case 3 as in the description of the first embodiment.

Furthermore, as shown in FIG. 5, each battery cell 5 is provided with the temperature sensor 7 which measures the temperature thereof. Then, the control unit 16 identifies the maximum value for each arm 4 from the measurement temperatures of all battery cells 5, and transmits a control signal to the fan 11 of each battery unit 2 and the driving unit 14 of each auxiliary intake exhaust port 13 so that the identified maximum values for the respective arms 4 become substantially equal to each other. Then, the fan 11 which receives the control signal rotates at a number of rotations according to the information on the number of rotations included in the control signal. Further, the driving unit 14 which receives the control signal adjusts the opening degree of the opening and closing mechanism 15 of the auxiliary intake exhaust port 13 according to the information on the opening degree included in the control signal.

As specific control, when the maximum value obtained in the plurality of battery cells 5 constituting an arm 4a is higher than the maximum value obtained in the plurality of battery cells 5 constituting an arm 4b, each driving unit 14 is controlled so that the opening degree of the opening and closing mechanism 15 of the auxiliary intake exhaust port 13 provided at a position near the arm 4a becomes relatively higher than the opening degree of the opening and closing mechanism 15 of the auxiliary intake exhaust port 13 provided at a position near the arm 4b. Accordingly, the flow volume of the cooling air which flows to the passageway 19 corresponding to the arm 4a is made to be larger than the flow volume of the cooling air which flows to the passageway 20 corresponding to the arm 4b, thereby effectively cooling the arm. Further, if necessary, the number of rotations of the fan 11 of the battery unit 2 is increased, so that the flow volume of the cooling air which flows to the passageway 19 corresponding to the arm 4a is made to be much larger, thereby more effectively cooling the arm 4a.

With the above-described configuration, the arm can be cooled so that the temperature of the battery cell 5 with the maximum value in the plurality of battery cells 5 constituting the arm 4a and the temperature of the battery cell 5 with the maximum value in the plurality of battery cells 5 constituting the arm 4b become substantially equal to each other within a predetermined allowable temperature range. For this reason, a variation in the degradation speed between the arms 4a and 4b can be reduced.
Furthermore, in the embodiment, the opening and closing mechanism 15 is provided so as to correspond to the auxiliary intake exhaust port 13, but the invention is not limited thereto. For example, the intake exhaust port 12 may be also provided with the opening and closing mechanism 15. For example, when the battery cells 5 with the highest temperature in the arm 4a and the arm 4b are respectively present at a position near the auxiliary intake exhaust port 13, the intake exhaust port 12 is closed so that cooling air may first flow from the auxiliary intake exhaust port 13 into the battery case 3. Thus, the maximum value of the arm 4a and the maximum value of the arm 4b can be further promptly made to become substantially equal to each other. As a result, a variation in the degradation speed between the arms 4a and 4b can be promptly reduced.

Further, in the embodiment, an example has been described in which two arms 4 are arranged inside the battery unit 2. However, the invention is not limited thereto. For example, one arm 4 is disposed inside the battery case 3 with the intake exhaust port, and the arm 4 may be cooled in a manner such that the control unit 16 controls the fan 11, the opening and closing mechanism 15, or the like so that the temperature of the battery cell 5 with the highest temperature in the respective battery cells 5 constituting the arm 4 falls within the predetermined allowable temperature range.

Further, as described above, the arm 4 and the battery cell 5 inside the battery case 3 are disposed so as to be planarly symmetrical. For this reason, the passageways 19, 20, and 21 for cooling air which flows symmetrically about the installation position of the fan 11 inside the battery case 3 can be formed. Then, the cooling environments of two arms 4 can be adjusted to equal to each other, and two arms can be evenly cooled. As a result, it is possible to further reliably reduce a variation in the degradation speed between the respective arms 4 inside the battery case 3 with a simple cooling structure and make the degradation speed uniform.

Furthermore, in the embodiment, the battery system 1 has been exemplified which includes the battery unit 2 having the arms 4 formed by electrically connected the plurality of battery cells 5 in series to each other and electrically connected in series to each other. However, the number of the battery cells and the arm and the battery units 2 is not limited to those of FIGS. 4 and 5. For example, the method of connecting the arms 4 may be a serial connection or a combination of a serial connection and a parallel connection. Then, the plurality of arms 4 which are formed by electrically connected the plurality of battery cells 5 in series to each other may be electrically connected in series or in parallel to each other. Further, the number of the battery cells 5 constituting one battery unit 2 may be different from the number of the battery cells 5 constituting the other battery unit 2.

### [Modified example]

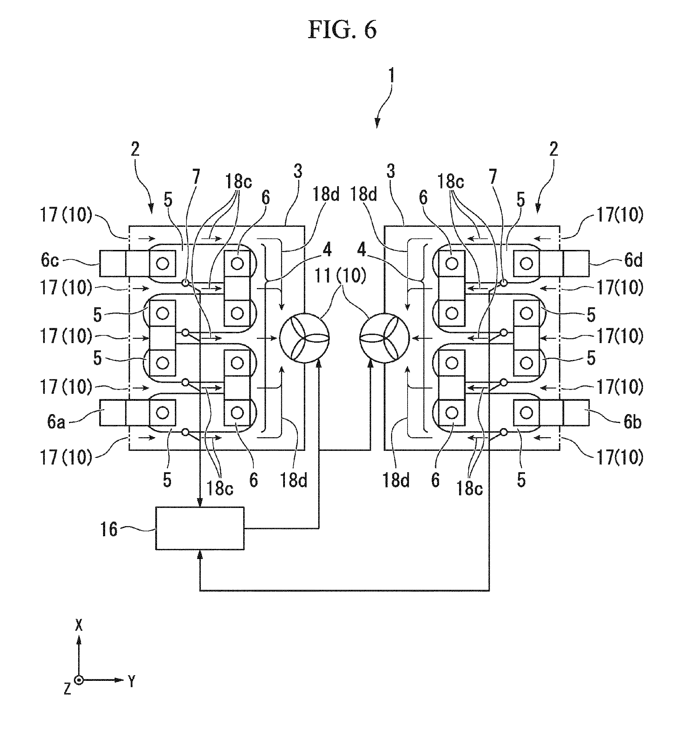

The technical scope of the present invention is not limited to the above-described embodiments, and the respective embodiments may be appropriately combined with each other. That is, various modifications may be made without departing from the spirit of the invention. Hereinafter, a modified example of the embodiment is illustrated. FIG. 6 is a diagram illustrating the modified example according to the first embodiment. In FIG. 6, the same reference numerals are applied to the same configuration as that of the first embodiment, and the description thereof will be appropriately omitted. The modified example and the first embodiment are different from each other in the position and the number of the intake exhaust ports.

In the first embodiment, one intake exhaust port 12 is provided for each battery unit 2, but in the modified example, the intake exhaust ports 17 are provided in numbers equal to the number of passageways 18c. More specifically, as shown in FIG. 6, five passageways 18c are provided, and five intake exhaust ports 17 are provided to the battery case 3 so as to correspond to the passageways 18c. Furthermore, the number of the intake exhaust ports 17 or the passageways 18c is not limited to five, and can be changed according to the number of the battery cells 5 and the like.
In this way, the "intake exhaust ports are provided so as to correspond to the passageways" mentioned in the invention includes a case where one intake exhaust port is provided for the plurality of passageways, a case where the intake exhaust port is provided so as to correspond one-to-one to the number of passageways as described above, or a case where two or more intake exhaust ports are provided for the plurality of passageways.

Accordingly, when the fan 11 is driven, cooling air can be supplied from outside the battery unit 2 to the passageway 18c through the intake exhaust port 17 for each passageway 18c, so that the cooling air can be more evenly supplied to the respective battery cells 5 constituting the arm 4.

Further, if necessary, the opening and closing mechanism 15 and the driving mechanism 14 shown in the second embodiment are respectively provided to the intake exhaust port 17 (the auxiliary intake exhaust port), and are controlled by the control unit 16 so that the flow volume of the cooling air for each intake exhaust port 17 can be adjusted. For example, the opening degree using the opening and closing mechanism 15 can be increased in ascending order by the temperature detected by the temperature sensor 7 provided to the plurality of battery cells 5 constituting the arm 4. That is, the opening degree of the opening and closing mechanism 15 which is provided to the intake exhaust port 17 corresponding to the passageway 18c of the battery cell 5 with a relatively high temperature detected by the temperature sensor 7 is made to be relatively large, and the opening degree of the opening and closing mechanism corresponding to the passageway 18c of the battery cell with a relatively low temperature detected by the temperature sensor is made to be relatively small.

Furthermore, in the case of the battery system with a plurality of arms 4, the battery cells with the highest temperature in each arms 4 are individually identified. Then, the fan 11 can be controlled so that the maximum values detected by the respective arms become substantially equal to each other, and the opening degree using the opening and closing mechanism 15 can be controlled so as to be correlated to the temperature of each battery cell 5 detected by the temperature sensor 7. In this way, the control unit 16 performs control so that the opening degrees relating to the opening and closing states of the plurality of intake exhaust ports 17 are made to be different from each other according to the temperature of the battery cell 5 detected by the temperature sensor 7.
Accordingly, the arm can be cooled so that the degradation speed becomes more uniform not only between the arms 4 but also between the battery cells 5, and a variation in the degradation speed between the arms 4 and the battery cells 5 can be reduced.

### INDUSTRIAL APPLICABILITY

According to the battery system of the present invention, since the degradation speed can be uniformly set by reducing a variation in the degradation speed of the battery cell inside the arm with a simple cooling structure, the lifetime of the battery system can be extended.

### BRIEF DESCRIPTION OF THE REFERENCE SYMBOLS

1: Battery system
2: Battery unit
3: Battery case
4: Arm
5: Battery cell
6 (6a, 6b, 6c, 6d): Busbar
7: Temperature sensor
10: Cooling unit
11: Fan
12: Intake exhaust port
13: Auxiliary intake exhaust port
14: Driving unit
15: Opening and closing mechanism
16: Control unit
17: Intake exhaust port
18 (18a, 18b, 18c, 18d), 19 (19a, 19b, 19c, 19d), 20 (20a, 20b, 20c, 20d), 21 (21a, 21b, 21c, 21d): Passageway
30: Load

## Claims

1. An battery system with a plurality of arms, each of which consists of electrically connected battery cells to each other, the battery system comprising:
temperature detection units that are provided to each of the battery cells;
a cooling unit that cools the arm; and
a control unit that identifies a maximum value from temperatures of the battery cells measured by the temperature detection units and controls the cooling unit so that the maximum value of the battery cells falls within a predetermined allowable temperature range.

2. The battery system according to claim 1,
wherein the plurality of the arms are electrically connected in series or in parallel to each other, and
the control unit identifies a maximum value of each arm from the temperatures of the battery cells measured by the temperature detection units and controls the cooling unit so that the respective maximum values become substantially equal to each other.

3. The battery system according to claim 2,
wherein the cooling unit comprises:
a fan provided on a battery case in which the plurality of the arms are stored; and
a plurality of intake exhaust ports,
wherein at least two of the plurality of the intake exhaust ports are auxiliary ports having an opening and closing mechanism for opening and closing the auxiliary port; and
the control unit is configured to control degrees of opening of the opening and closing mechanism of the two ports so as to be varied each other in response to the maximum values of each arm.

4. The battery system according to claim 3,
wherein passageway is formed between the battery case and the arm, and between the battery cells;
the plurality of the intake exhaust ports are formed on the battery case corresponding to each passageway;
the shape of the battery case, the arrangement of the arm, the arrangement of the battery cell, and the intake exhaust ports are planarly symmetrical.
